# EUROPÄISCHE PATENTANMELDUNG

(11) **EP 4 541 745 A1**
(43) Veröffentlichungstag der Anmeldung: **23.04.2025**
(21) Anmeldenummer: 23204275.4
(22) Anmeldetag: 18.10.2023
(51) Int. Cl.: B65H 51/02, H02G 1/08

(54) **VORRICHTUNG ZUM VERSCHIEBEN VON FLEXIBLEM STRANGMATERIAL**

(71) Anmelder: Katimex Cielker GmbH, 54584 Jünkerath (DE)
(72) Erfinder: Michels, Frank, 54585 Esch (DE)
(74) Vertreter: Brinkmann & Partner

(57) **Zusammenfassung**

Die Erfindung betrifft eine Vorrichtung zum Verschieben von flexiblem Strangmaterial (2), insbesondere als Kabeleinziehhilfe, insbesondere flexiblen Stäben zum Einziehen von Kabeln in Kabelschutzrohre, aufweisend ein Gehäuse (5), in dem eine Fördereinrichtung für das Strangmaterial angeordnet ist, und einem Antriebselement, das mit einem maschinellen Antrieb verbindbar ist, Bei dieser Vorrichtung ist vorgesehen, dass die Fördereinrichtung ein rotatorisch antreibbares Förderelement mit einer Aufnahme für das Strangmaterial (2) aufweist, dass das Förderelement eine konturierte Innenfläche (19) aufweist, die formschlüssig mit einer Außenkontur (20) des Strangmaterials (2) verbindbar ist, wobei eine Rotation des Förderelements derart auf das Strangmaterial (2) übertragen wird, dass das Strangmaterial (2) in Längsachsenrichtung des Förderelements bewegt wird und dass das Förderelement über eine Getriebeanordnung mit dem Antriebselement (9) verbunden ist.

## Beschreibung

Die Erfindung betrifft eine Vorrichtung zur schiebenden und/oder ziehenden Bewegung von flexiblem Strangmaterial, insbesondere als Kabeleinziehhilfe, insbesondere flexiblen Stäben zum Einziehen von Kabeln in Kabelschutzrohre, aufweisend ein Gehäuse, in dem eine Fördereinrichtung für das Strangmaterial angeordnet ist, und einem Antriebselement, das mit einem maschinellen Antrieb verbindbar ist.

Aus dem Stand der Technik sind verschiedene Kabeleinzughilfen bekannt. Diese Kabeleinzughilfen dienen dazu beispielsweise in ein Leerrohr eingeschoben zu werden und bei Austritt aus dem Leerrohr mit einem einzuziehenden Kabel verbunden zu werden. Durch das Zurückziehen der Kabeleinziehhilfe wird gleichzeitig das Kabel in das Leerrohr eingezogen. Derartige Kabeleinzughilfen weisen beispielsweise einen Glasfaserstab auf, der eine ausrechende Flexibilität aufweist, so dass er auch durch Krümmungen im Bereich des Kabelschutzrohres geführt werden kann. Kabeleinziehhilfen werden aber auch im Bereich der Verlegung von Kabeln außerhalb von Gebäuden eingesetzt.

Um das Einführen des flexiblen Strangmaterials, beispielsweise des Glasfaserstabes in Kabelschutzrohre oder dergleichen zu erleichtern sind verschiedene Hilfsmittel bekannt.

Beispielsweise offenbart die DE 197 25 364 C1 eine als Zange ausgebildete Vorrichtung zum Verschieben von flexiblem Strangmaterial, die einen Zangenkörper aufweist, der eine längsverlaufende Öffnung zur Aufnahme eines Teils des Strangmaterials hat, wobei der Zangenkörper einen schwenkbar gelagerten Handgriff aufweist, der derart im Zangenkörper gelagert ist, dass der Handgriff bei Betätigung mindestens teilweise in die längsverlaufende Öffnung des Zangenkörpers eingreift. Bei dieser Zange ist vorgesehen, dass dem Handgriff gegenüberliegend im Zangenkörper eine antreibbare Fördereinrichtung angeordnet ist, die beispielsweise ein Treibrad aufweist, das reibschlüssig auf das flexible Strangmaterial wirkt und dieses flexible Strangmaterial in Längsrichtung des Zangenkörpers verschiebt. Um die notwendige Reibkraft zu erzielen wird hierzu der Handgriff auf das Strangmaterial gepresst, so dass das Strangmaterial mit großer Reibkraft auf der Fördereinrichtung gefördert werden kann. Ergänzend kann bei dieser Zange ein Treibriemen vorgesehen sein, der in Längsrichtung des Zangenkörpers umlaufend angeordnet ist und den Vorteil hat, dass das Strangmaterial über eine große Länge des Zangenkörpers mit der Fördereinrichtung in Kontakt steht. Sowohl das Treibrad als auch der Treibriemen können elektromotorisch, das heißt mit einem maschinellen Antrieb bewegt werden.

Dem Grunde nach hat sich diese vorbekannte Zange für das Verschieben von flexiblem Strangmaterial insbesondere bei kurzen Einschublängen und Strangmaterialien mit geringem Durchmesser bewährt. Dennoch besteht Verbesserungsbedarf.

Der Erfindung liegt daher die **AUFGABE** zugrunde, eine gattungsgemäße Vorrichtung derart weiterzubilden, dass eine verbesserte Kraftübertragung auf das flexible Strangmaterial gegeben ist und das gleichzeitig ein weitgehend automatisierter und damit nicht manueller Antrieb möglich ist.

Die **LÖSUNG** dieser Aufgabenstellung sieht vor, dass die Fördereinrichtung ein rotatorisch antreibbares Förderelement mit einer Aufnahme für das Strangmaterial aufweist, das das Förderelement eine konturierte Innenfläche aufweist, die formschlüssig mit einer Außenkontur des Strangmaterials verbindbar ist, wobei eine Rotation des Förderelements derart auf das Strangmaterial übertragen wird, dass das Strangmaterial in Längsachsenrichtung des Förderelements bewegt wird und dass das Förderelement über eine Getriebeanordnung mit dem Antriebselement verbunden ist.

Mit der erfindungsgemäßen Vorrichtung ist es möglich eine hohe Kraftübertragung von der Fördereinrichtung auf das Strangmaterial bereitzustellen. Dies erfolgt insbesondere durch das rotatorisch antreibbare Förderelement der Fördereinrichtung, das formschlüssig mit dem Strangmaterial zusammenwirkt, wobei das Förderelement eine entsprechend konturierte Innenfläche aufweist und das Strangmaterial eine mit der konturierten Innenfläche formschlüssig zusammenwirkende Außenkontur hat. Des Weiteren ist das Förderelement über eine Getriebeanordnung mit dem Antriebselement verbunden. Das Antriebselement kann mit einem motorischen Antrieb, beispielsweise auch einer Bohrmaschine, einem elektrischen Schrauber oder einem Elektromotor verbunden werden, um das Drehmoment dieses Antriebs auf das Antriebselement zu übertragen, welches mit der Getriebeanordnung auf das Förderelement übertragen wird, um das Förderelement in Rotation zu versetzen. Durch die Getriebeanordnung besteht die Möglichkeit das Drehmoment des Antriebs entsprechend auf die Anforderungen des Vortriebs des Strangmaterials umzusetzen.

Vorzugsweise ist das Förderelement als hohlzylindrische Hülse ausgebildet. Die hohlzylindrische Hülse weist die konturierte Innenfläche auf, die sich über die gesamte Innenfläche der Hülse erstrecken kann, so dass eine sehr große Kontaktfläche mit der Außenfläche des Strangmaterials bereitsteht, welche Außenfläche des Strangmaterials die Außenkontur aufweist.

Das Gehäuse ist vorzugsweise aus trennbaren Segmenten, insbesondere aus zwei Schalenhälften ausgebildet, die mit Schrauben und/oder Klipsen miteinander verbunden sind. Als Segment des Gehäuses ist auch ein Deckel zu verstehen, der für einen Zugang in einen Innenbereich des Gehäuse verschwenkbar oder entfernbar ist. Durch diese Ausgestaltung besteht die Möglichkeit beispielsweise das Förderelement, insbesondere die hohlzylindrische Hülse in einfacher Weise auszuwechseln, um die Vorrichtung an unterschiedliche Strangmaterialien anpassen zu können und/oder das Einlegen oder Austauschen des Strangmaterials auch unterschiedlicher Ausgestaltung zu vereinfachen.

Die Getriebeanordnung weist zwei miteinander kämmende Zahnräder auf, wobei ein erstes Zahnrad drehfest mit dem Förderelement und ein zweites Zahnrad drehfest mit einer Welle des Antriebselementes verbunden ist. Die Zahnräder können eine Geradverzahnung aufweisen und in dem Gehäuse nebeneinander angeordnet sein. Es besteht aber auch die Möglichkeit, die miteinander kämmenden Zahnräder als Kegelzahnräder auszubilden, so dass beispielsweise die Achsrichtungen des Förderelements und des Antriebselementes rechtwinklig zueinander ausgerichtet sind. Hierdurch ergibt sich insbesondere der Vorteil, dass der Antrieb in einem Bereich der Vorrichtung angeordnet werden kann, der hinsichtlich der Anordnung des Förderelementes und des sich dadurch erstreckenden Strangmaterials nicht beeinflussen. Hierdurch wird auch verhindert, dass beispielsweise bei einer Betätigung der Vorrichtung durch eine auf eine Welle des Antriebselementes aufgesetzte Bohrmaschine ein Kontakt einer Hand der handhabenden Person mit dem Strangmaterial und insbesondere der Außenkontur des Strangmaterials zur Vermeidung von Verletzungen verhindert wird.

Nach einem weiteren Merkmal der Erfindung ist vorgesehen, dass die Welle des Antriebselementes eine zentral im zweiten Zahnrad angeordnete Öffnung und das Förderelement eine zentral im ersten Zahnrad angeordnete Öffnung durchgreift und sowohl das Förderelement als auch die Welle in beiderseits der Zahnräder angeordneten und in Ausnehmung des Gehäuses angeordneten Kugellagern gelagert sind. Diese Ausgestaltung hat den Vorteil, dass in den Kugellagern möglichst geringe Reibverluste verursacht werden, so dass zum einen die Welle des Antriebselementes als auch zum anderen das Förderelement gegen nur geringe Reibkräfte angetrieben werden müssen. Des Weiteren ergibt sich durch die Ausgestaltung der Vorrichtung mit Kugellagern eine exakte Führung und Lagerung der Welle des Antriebselementes und des Förderelementes.

Vorzugsweise ist die konturiert ausgebildete Innenfläche des Förderelements als Helix ausgebildet, die beispielsweise mit dem flexiblen Strangmaterial formschlüssig verbindbar ist, wobei das flexible Strangmaterial als verdrilltes oder verdrehtes Band ausgebildet ist. Beispielsweise weist das verdrillte Band als Strangmaterial drei Stränge bzw. Adern auf, die verdrillt angeordnet sind, so dass sich eine gleichmäßige Steigung der einzelnen Stränge bzw. Adern im Strangmaterial ausbildet und diese Steigung mit der Steigung der Helix des Förderelements übereinstimmt. Die Helix greift im Bereich des Förderelements somit in das verdrillte Band ein und schiebt dieses über eine formschlüssige Verbindung entsprechend der rotatorischen Antriebsrichtung der Welle des Antriebselements in die eine oder andere Richtung in Längsachsenrichtung des Strangmaterials.

Nach einem weiteren Merkmal ist vorgesehen, dass das Antriebselement und das Förderelement mit ihren Längsachsen parallel zueinander angeordnet sind. Hieraus ergibt sich eine vereinfachte Konstruktion, die preisgünstig herstellbar ist. Diese Ausgestaltung führt auch zu einer kompakt bauenden und wartungsfreien Vorrichtung.

Schließlich ist nach einem weiteren Merkmal der Erfindung vorgesehen, dass das als Welle ausgebildete Antriebselement an einem freien, aus dem Gehäuse hervorstehenden Ende abgesetzt ausgebildet ist und demnach zwei Bereiche mit unterschiedlichem Durchmesser aufweist zwischen den ein Absatz ausgebildet ist. Die beiden Bereiche mit unterschiedlichem Durchmesser bilden somit im Bereich des Absatzes einen Anschlag aus, so dass beispielsweise bei Verwendung einer Bohrmaschine ein Bohrfutter nur bis zum Anschlag aufgeschoben werden kann, so dass beispielsweise ein Kontakt des Bohrfutters mit dem Gehäuse oder einem Kugellager verhindert wird.

Weitere Merkmale und Vorteile der Erfindung ergeben sich aus der nachfolgenden Beschreibung der zugehörigen Zeichnungen.

In den Zeichnungen zeigen:
- Fig. 1: eine Vorrichtung zum Verschieben von flexiblem Strangmaterial in perspektivischer Ansicht und
- Fig. 2: die Vorrichtung gemäß Figur 1 in einer Explosionsdarstellung.

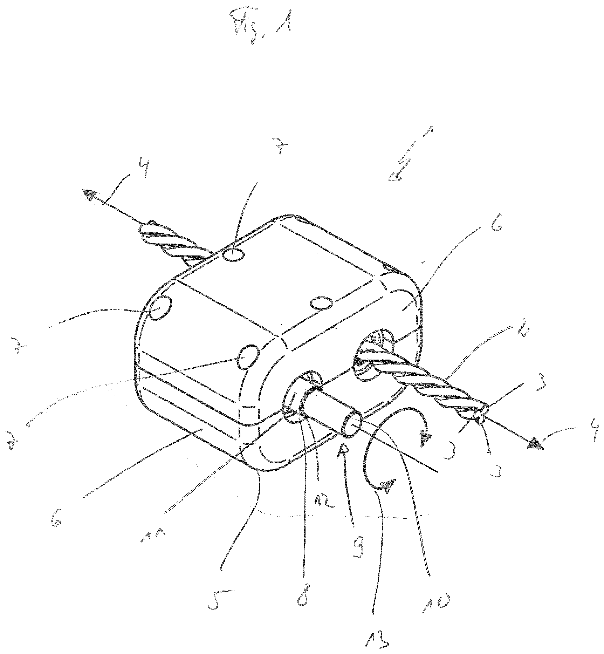

Figur 1 zeigt eine Vorrichtung 1 zum Verschieben eines flexiblen Stabes 2 zum Einziehen von Kabeln beispielsweise in Kabelschutzrohre. Der flexible Stab 2 ist im dargestellten Ausführungsbeispiel gemäß Figur 1 als verdrilltes Band aus drei Adern 3 ausgebildet und kann mittels der Vorrichtung 1 in entgegengesetzte Richtungen gemäß den Pfeilen 4 verschoben werden.

Die Vorrichtung 1 weist ein Gehäuse 5 auf, welches zwei Schalenhälften 6 hat, die über Schrauben 7 und Muttern verbunden sind.

Des Weiteren zeigt Figur 1 eine Welle 8 als Teil eines Antriebselements 9. Die Welle 8 steht mit einem Ende aus dem Gehäuse 5 hervor und weist erkennbar einen ersten Bereich 10 mit einem ersten Durchmesser und einen zweiten Bereich 11 mit einem zweiten Durchmesser auf, wobei der zweite Durchmesser des zweiten Bereichs größer ausgebildet ist, als der erste Durchmesser des ersten Bereichs 10, so dass der Übergang zwischen den Bereichen 10 und 11 einen Absatz 12 ausbildet, der einen Anschlag für beispielsweise eine nicht näher dargestellte auf die Welle 8 aufzusetzende Bohrmaschine bildet. Der Absatz 12 dient hierbei dazu, das Aufsetzen der Bohrmaschine in Längsachsenrichtung der Welle 8 derart zu beschränken, dass ein Kontakt eines drehenden Bohrfutters mit der Außenmantelfläche des Gehäuses 5 verhindert werden kann.

Die Welle 8 ist gemäß den Pfeilen 13 in unterschiedliche Drehrichtungen antreibbar und in Abhängigkeit der Drehrichtung der Welle 8 gemäß dem Pfeil 13 wird der Stab entsprechend den Pfeilen 4 verschoben.

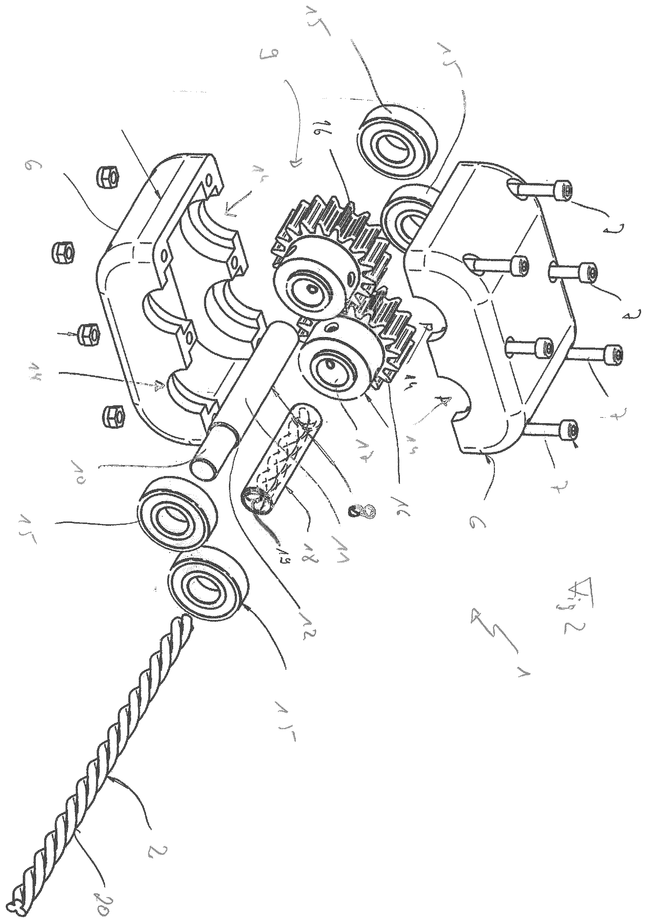

Insbesondere aus der Figur 2 ist zu erkennen, dass die Schalenhälften 6 jeweils vier halbkreisförmige und abgesetzt ausgebildete Ausnehmungen 14 aufweist, von denen jeweils zwei Ausnehmungen 14 in jeder Schalenhälfte 6 koaxial zueinander in zwei Seitenwandungen des Gehäuses 5 angeordnet sind.

Die Ausnehmungen 14 dienen der Aufnahme von Kugellagern 15.

Figur 2 zeigt ferner zwei dem Antriebselement 9 zugehörende Zahnräder 16, die miteinander kämmen, wobei ein Zahnrad 16 drehfest mit der Welle 8 verbunden ist, wobei die Welle 8 das Zahnrad 16 durchgreift und in zwei Kugellagern 15 drehbar gelagert ist.

Das zweite Zahnrad 16 weist eine Bohrung 17 auf, in die ein rotatorisch antreibbares Förderelement, nämlich eine hohlzylindrische Hülse 18 eingesteckt ist, die wiederum in einem Kugellager 15 drehbar gelagert ist.

Die Hülse 18 weist eine Innenfläche 19 auf, die als Helix ausgebildet ist und formschlüssig mit einer Außenkontur 20 des Stabes 2 derart verbindbar ist, dass eine Rotation der Hülse 18 derart auf den Stab 2 übertragen wird, dass der Stab 2 in Längsachsenrichtung der Hülse 18 bewegt wird. Der Antrieb für diese Bewegung erfolgt beispielsweise über eine auf den Bereich 10 der Welle 8 aufgesetzte Bohrmaschine und die kämmenden Zahnräder 16.

Durch eine Öffnung des Gehäuses 5 besteht die Möglichkeit des Auswechselns der Hülse 18, so dass in Abhängigkeit des zu verschiebenden Stabes 2 und dessen Außenkontur 20 eine Hülse 18 mit passender Innenfläche 19 verwendet werden kann. Die Innenfläche 19 der Hülse 18 kann beispielsweise auf eine Steigung der durch die Verdrillung der Adern 3 entsprechend ausgebildeten Außenkontur 20 angepasst werden. Auch besteht die Möglichkeit, eine Außenkontur 20 des Stabes 2 durch über die Außenkontur 20 hervorstehende Vorsprünge, beispielsweise in Form einer Helix angeordneten Rippen eine entsprechende Hülse 18 zu verwenden, die formschlüssig mit diesen Rippen zusammenwirkt. Andere Vorsprünge sind selbstverständlich möglich. Hierbei muss es sich beispielsweise nicht um eine durchgehende Helix auf der Außenmantelfläche des Stabes 2 handeln, es genügen gegebenenfalls auch stabförmige Vorsprünge, die in regelmäßigen Abständen auf der Außenfläche des Stabes 2 derart angeordnet sind, dass sie in Zusammenwirkung mit der Innenfläche 19 der Hülse 18 wiederum eine helixartige Struktur ausbilden.

**Bezugszeichen**

| | | | |
|---|---|---|---|
| 1 | Vorrichtung | 18 | Hülse |
| 2 | Stab | 19 | Innenfläche |
| 3 | Ader | 20 | Außenkontur |
| 4 | Pfeil | | |
| 5 | Gehäuse | | |
| 6 | Schalenhälfte | | |
| 7 | Schrauben | | |
| 8 | Welle | | |
| 9 | Antriebselement | | |
| 10 | Bereich | | |
| 11 | Bereich | | |
| 12 | Absatz | | |
| 13 | Pfeil | | |
| 14 | Ausnehmungen | | |
| 15 | Kugellager | | |
| 16 | Zahnrad | | |
| 17 | Bohrung | | |

## Patentansprüche

1. Vorrichtung zur schiebenden und/oder ziehenden Bewegung von flexiblem Strangmaterial, insbesondere als Kabeleinziehhilfe, insbesondere flexiblen Stäben zum Einziehen von Kabeln in Kabelschutzrohre, aufweisend ein Gehäuse, in dem eine Fördereinrichtung für das Strangmaterial angeordnet ist, und einem Antriebselement, das mit einem maschinellen Antrieb verbindbar ist,
**dadurch gekennzeichnet,**
**dass** die Fördereinrichtung ein rotatorisch antreibbares Förderelement mit einer Aufnahme für das Strangmaterial () aufweist,
das Förderelement eine konturierte Innenfläche (19) aufweist, die formschlüssig mit einer Außenkontur (20) des Strangmaterials (2) verbindbar ist, wobei eine Rotation des Förderelements derart auf das Strangmaterial (2) übertragen wird, dass das Strangmaterial (2) in Längsachsenrichtung des Förderelements bewegt wird und dass das Förderelement über eine Getriebeanordnung mit dem Antriebselement (9) verbunden ist.

2. Vorrichtung nach Anspruch 1,
**dadurch gekennzeichnet,**
**dass** das Förderelement als hohlzylindrische Hülse (18) ausgebildet ist.

3. Vorrichtung nach Anspruch 1 oder 2,
**dadurch gekennzeichnet,**
**dass** das Gehäuse (5) aus zwei Schalenhälften (6) besteht, die mit Schrauben (7) miteinander verbindbar sind.

4. Vorrichtung nach einem der Ansprüche 1 bis 3,
**dadurch gekennzeichnet,**
**dass** das Förderelement auswechselbar im Gehäuse (5) angeordnet ist.

5. Vorrichtung nach einem der Ansprüche 1 bis 4,
**dadurch gekennzeichnet,**
**dass** die Getriebeanordnung zwei miteinander kämmende Zahnräder (16) aufweist, wobei ein erstes Zahnrad (16) drehfest mit dem Förderelement und ein zweites Zahnrad (16) drehfest mit einer Welle (8) des Antriebselementes (9) verbunden ist.

6. Vorrichtung nach Anspruch 5,
**dadurch gekennzeichnet,**
**dass** die Welle (8) des Antriebselementes (9) eine zentral im zweiten Zahnrad (16) angeordnete Öffnung und das Förderelement eine zentral im ersten Zahnrad (16) angeordnete Öffnung (17) durchgreift und sowohl das Förderelement als auch die Welle (8) in beiderseits der Zahnräder (16) angeordneten und in Ausnehmungen (14) des Gehäuses (5) angeordneten Kugellagern (15) gelagert sind.

7. Vorrichtung nach einem der Ansprüche 1 bis 6,
**dadurch gekennzeichnet,**
**dass** die konturiert ausgebildete Innenfläche (19) des Förderelements als Helix ausgebildet ist.

8. Vorrichtung nach einem der Ansprüche 1 bis 7,
**dadurch gekennzeichnet,**
**dass** das Antriebselement (9) und das Förderelement mit ihren Längsachsen parallel zueinander angeordnet sind.

9. Vorrichtung nach einem der Ansprüche 1 bis 8,
**dadurch gekennzeichnet,**
**dass** das als Welle (8) ausgebildete Antriebselement (9) an einem freien, aus dem Gehäuse (5) hervorstehenden Ende abgesetzt ausgebildet ist und demnach zwei Bereiche (10, 12) mit unterschiedlichem Durchmesser aufweist.

## Geänderte Patentansprüche

### Geänderte Patentansprüche gemäss Regel 137(2) EPÜ.

1. Vorrichtung zur schiebenden und/oder ziehenden Bewegung von flexiblem Strangmaterial, insbesondere als Kabeleinziehhilfe, insbesondere flexiblen Stäben zum Einziehen von Kabeln in Kabelschutzrohre, aufweisend ein Gehäuse, in dem eine Fördereinrichtung für das Strangmaterial angeordnet ist, und einem Antriebselement, das mit einem maschinellen Antrieb verbindbar ist,
**dadurch gekennzeichnet,**
**dass** die Fördereinrichtung ein rotatorisch antreibbares Förderelement in Form einer hohlzylindrischen Hülse mit einer Aufnahme für das Strangmaterial (2) aufweist, das Förderelement eine konturierte Innenfläche (19) aufweist, die formschlüssig mit einer Außenkontur (20) des Strangmaterials (2) verbindbar ist, wobei eine Rotation des Förderelements derart auf das Strangmaterial (2) übertragen wird, dass das Strangmaterial (2) in Längsachsenrichtung des Förderelements bewegt wird und dass das Förderelement über eine Getriebeanordnung mit dem Antriebselement (9) verbunden ist.

2. Vorrichtung nach Anspruch 1,
**dadurch gekennzeichnet,**
**dass** das Gehäuse (5) aus zwei Schalenhälften (6) besteht, die mit Schrauben (7) miteinander verbindbar sind.

3. Vorrichtung nach einem der Ansprüche 1 bis 2,
**dadurch gekennzeichnet,**
**dass** das Förderelement auswechselbar im Gehäuse (5) angeordnet ist.

4. Vorrichtung nach einem der Ansprüche 1 bis 3,
**dadurch gekennzeichnet,**
**dass** die Getriebeanordnung zwei miteinander kämmende Zahnräder (16) aufweist, wobei ein erstes Zahnrad (16) drehfest mit dem Förderelement und ein zweites Zahnrad (16) drehfest mit einer Welle (8) des Antriebselementes (9) verbunden ist.

5. Vorrichtung nach Anspruch 4,
**dadurch gekennzeichnet,**
**dass** die Welle (8) des Antriebselementes (9) eine zentral im zweiten Zahnrad (16) angeordnete Öffnung und das Förderelement eine zentral im ersten Zahnrad (16) angeordnete Öffnung (17) durchgreift und sowohl das Förderelement als auch die Welle (8) in beiderseits der Zahnräder (16) angeordneten und in Ausnehmungen (14) des Gehäuses (5) angeordneten Kugellagern (15) gelagert sind.

6. Vorrichtung nach einem der Ansprüche 1 bis 5,
**dadurch gekennzeichnet,**
**dass** die konturiert ausgebildete Innenfläche (19) des Förderelements als Helix ausgebildet ist.

7. Vorrichtung nach einem der Ansprüche 1 bis 6,
**dadurch gekennzeichnet,**
**dass** das Antriebselement (9) und das Förderelement mit ihren Längsachsen parallel zueinander angeordnet sind.

8. Vorrichtung nach einem der Ansprüche 1 bis 7,
**dadurch gekennzeichnet,**
**dass** das als Welle (8) ausgebildete Antriebselement (9) an einem freien, aus dem Gehäuse (5) hervorstehenden Ende abgesetzt ausgebildet ist und demnach zwei Bereiche (10, 12) mit unterschiedlichem Durchmesser aufweist.
